# EUROPEAN PATENT SPECIFICATION

(11) **EP 4 230 902 B1**
(45) Date of publication and mention of the grant of the patent: **09.09.2026**
(21) Application number: 21880087.8
(22) Date of filing: 12.10.2021
(51) Int. Cl.: F16L 3/16, B63B 25/08, B63B 25/16, B63B 27/24, B65D 90/02, F16L 3/00, F16L 59/135, F17C 3/08

(54) **DOUBLE-WALLED HEAT INSULATION PIPING UNIT FOR LIQUEFIED GAS, AND LIQUEFIED GAS STORAGE VESSEL COMPRISING SAME**
DOPPELWANDIGE WÄRMEISOLIERLEITUNGSEINHEIT FÜR FLÜSSIGGAS UND FLÜSSIGGASSPEICHERBEHÄLTER DAMIT
UNITÉ À DOUBLE TUYAU D'ISOLATION THERMIQUE POUR GAZ LIQUÉFIÉ, ET RÉCIPIENT DE STOCKAGE DE GAZ LIQUÉFIÉ LA COMPRENANT

(30) Priority: 14.10.2020 JP 2020173394
(43) Date of publication of application: 23.08.2023
(73) Proprietor: KAWASAKI JUKOGYO KABUSHIKI KAISHA, Kobe-shi, Hyogo 650-8670 (JP)
(72) Inventor: URAGUCHI, Ryosuke, Kobe-shi, Hyogo 650-8670 (JP); SHIMOGAKI, Takashi, Kobe-shi, Hyogo 650-8670 (JP); MURAGISHI, Osamu, Kobe-shi, Hyogo 650-8670 (JP); UEDA, Yuichiro, Kobe-shi, Hyogo 650-8670 (JP); MATSUMOTO, Akira, Kobe-shi, Hyogo 650-8670 (JP); OSAKI, Naoto, Kobe-shi, Hyogo 650-8670 (JP); TAKAKI, Kousaku, Kobe-shi, Hyogo 650-8670 (JP)
(74) Representative: Arnold & Siedsma
(86) International application number: PCT/JP2021/037668
(87) International publication number: WO 2022/080348

(56) References cited:
- CN-U- 203 147 171
- DE-A1- 2 525 693
- JP-A- 2017 061 945
- JP-A- H11 190 466
- JP-A- S4 859 416
- JP-U- S5 183 921
- JP-U- S53 108 629
- KR-B1- 102 111 473
- KR-U- 20120 001 870
- US-B1- 8 070 113

## Description

### CROSS REFERENCE TO THE RELATED APPLICATION

This application is based on and claims Convention priority to Japanese patent application No. 2020-173394, filed October 14, 2020.

### BACKGROUND OF THE INVENTION

### (Field of the Invention)

The present invention relates to a double-walled heat insulation piping unit for a liquefied gas and a liquefied gas storage vessel including the same.

### (Description of Related Art)

Conventionally, vacuum heat insulation pipes with a double-walled structure have been proposed in the art for use as piping to transfer a liquefied gas such as a liquefied natural gas or liquefied hydrogen between, for example, a liquefied gas carrier vessel and a storage tank on land (see, e.g., JP Laid-open Patent Publication No. 2015-004382). Such double-walled heat insulation pipes can achieve enhanced heat insulating performance by having a structure in which an inner tube is enclosed by an outer tube with a heat insulation layer in the form of, for example, a vacuum layer therebetween; as a result, possible elevation in the temperature of the cold liquefied gas flowing inside the inner tube can be effectively mitigated.

DE2525693A1 discloses a connector for protective tubing surrounding pipes, the connector comprising a base member supporting the pipes and rigidly secured as by welding to the end of one tube, wherein the connector has an expansion joint between the tube and the base member. US8070113B1 discloses a sway brace including a U-shaped sling with flanges at each end. The sling includes metal strapping formed in a U-shaped curve about an axis perpendicular to the width of the strapping in a manner to create rigidity and strength.

### SUMMARY OF THE INVENTION

Still, when a liquefied gas is allowed to flow in the double-walled heat insulation pipes, a difference in thermal contraction develops between the inner tube through which the liquefied gas having extremely low temperature passes and the outer tube which is subjected to the ambient air. Given that the inner tube must be supported on or constrained to the outer tube in such a way that a gap is ensured between the inner tube and the outer tube, the mentioned difference in thermal contraction, if left unaddressed, will become the cause of high stress to the inner tune and the outer tube; as such, this difference in thermal contraction must be absorbed. Nevertheless, it is not desirable to complicate the structure of the inner tube through which the liquefied gas passes and which is also difficult to inspect because such modification could jeopardize the reliability of the fundamental function of double-walled heat insulation pipes to transfer a liquefied gas.

To solve the aforementioned problem, an object of the present invention is to mitigate possible generation of high stress that results from a difference in thermal contraction between an inner tube and an outer tube of a double-walled heat insulation pipe for a liquefied gas with a simple design and without jeopardizing the reliability of the pipe in liquefied gas transfer according to the appended claims.

For the purpose of achieving the abovementioned object, the present invention provides a double-walled heat insulation piping unit for a liquefied gas which is a piping unit for transferring the liquefied gas, the unit including:
a double-walled heat insulation pipe including an inner tube configured to convey the liquefied gas therethrough and an outer tube covering the inner tube with a heat insulation layer therebetween, the outer tube including an extendable and contractible part configured to permit a change in a length of the outer tube at least in an axial direction;
a base including a portion confronting an outer peripheral surface of the double-walled heat insulation pipe; and
a constraint member secured to the base and configured to constrain the outer tube to the base in a displaceable manner at least in the axial direction.

Firstly, according to this configuration, it is an outer tube - not an inner tube through which a liquefied gas passes and which is also difficult to inspect - that is provided with an extendable and contractible part such as a bellows which is an effective mechanism to permit thermal contraction of the inner tube and absorb a difference in thermal contraction between the inner tube and the outer tube; thus, reliable transfer of the liquefied gas is ensured. Further, the provision of the extendable and contractible part in the outer tube means that there will be displacement of the outer tube in response to the thermal contraction of the inner tube. However, with the constraint member configured to constrain the outer tube in a displaceable manner, possible generation of high stress to the outer tube can be mitigated while also preventing the outer tube from being moved excessively by external causes. Accordingly, possible generation of high stress that results from a difference in thermal contraction between an inner tube and an outer tube of a double-walled heat insulation pipe for a liquefied gas can be mitigated with a simple design and without jeopardizing the reliability of the pipe in liquefied gas transfer.

The present invention provides a liquefied gas storage vessel including:
a hull;
a storage tank installed on the hull and configured to store a liquefied gas; and
a double-walled heat insulation piping unit for a liquefied gas as described above, the unit being mounted, at one end thereof, to the storage tank.

When a piping unit is installed to a liquefied gas storage vessel, it is particularly important that possible resonance or excessive movement of an outer tube provided with an extendable and contractible part - due to vibrations of a hull or deformation - be limited, in order to suppress stress generated in the outer tube. In the instant configuration of the liquefied gas storage vessel, the piping unit having the aforementioned configuration and benefits is installed in place. Accordingly, possible generation of high stress that results from a difference in thermal contraction between an inner tube and an outer tube can be mitigated with a simple design and without jeopardizing reliable transfer of a liquefied gas.

### BRIEF DESCRIPTION OF THE DRAWINGS

The present invention will be more clearly understood from the following description of preferred embodiments in conjunction with the accompanying drawings. However, the embodiments and the drawings are given merely for the purpose of illustration and explanation, and should not be used to delimit the scope of the present invention, which scope is to be delimited by the appended claims. In the accompanying drawings, alike symbols denote alike or corresponding parts throughout the different figures. In the figures,
Fig. 1 shows a top view illustrating the schematic configurations of a double-walled heat insulation piping unit for a liquefied gas and a liquefied gas storage vessel including the same according to an embodiment of the present invention;
Fig. 2 shows a sectional view illustrating the schematic configurations of the double-walled heat insulation piping unit for a liquefied gas and the liquefied gas storage vessel of Fig. 1;
Fig. 3 shows a longitudinal sectional view illustrating the schematic configuration of the interior of the double-walled heat insulation piping unit for a liquefied gas of Fig. 1;
Fig. 4A shows a top view schematically illustrating an example arrangement of the heat insulation piping unit for a liquefied gas of Fig. 1, in an ambient temperature state;
Fig. 4B shows a top view schematically illustrating an example arrangement of the heat insulation piping unit for a liquefied gas of Fig. 1, in a low temperature state; and
Fig. 5 shows a transverse sectional view of the heat insulation piping unit for a liquefied gas of Fig. 1.

### DESCRIPTION OF EMBODIMENTS

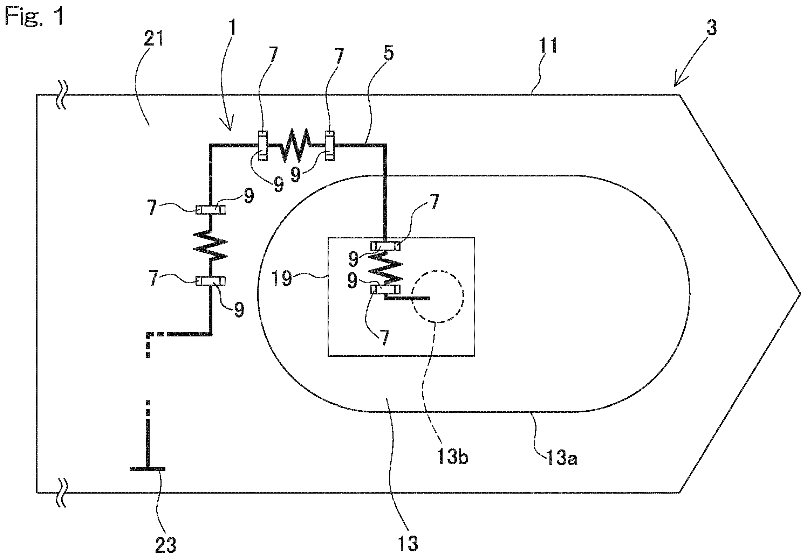

Hereinafter, preferred embodiments of the present invention are described with reference to the drawings. Fig. 1 shows a double-walled heat insulation piping unit 1 for a liquefied gas (which will hereinafter be simply referred to as a "piping unit") and a liquefied gas storage vessel 3 including the same according to an embodiment of the present invention. The piping unit 1 is used to transfer a liquefied gas. The piping unit 1 includes a double-walled heat insulation pipe 5 that has a double-tube structure (which will hereinafter be simply referred to as a "pipe"), as well as a base 7 and a constraint member 9 that serve as a support mechanism for supporting the pipe 5, as will be later discussed.

As used herein, a "liquefied gas storage vessel" refers to a vessel capable of storing a liquefied gas. The liquefied gas storage vessel 3 in the instant embodiment is a liquefied gas carrier vessel. Nevertheless, examples of the liquefied gas storage vessel 3 also include a liquefied gas-fueled vessel or a bunkering vessel that supplies another vessel with a liquefied gas, in addition to a liquefied gas carrier vessel.

Specifically, in the illustrated example, the pipe 5 is installed to a hull 11 of the liquefied gas storage vessel 3 and mounted to a storage tank 13 configured to store a liquefied gas. Through the pipe 5 of the piping unit 1, a liquefied gas is transferred between the storage tank 13 and an environment external thereto, such as a liquefied gas storage terminal on land.

The liquefied gas transferred through the pipe 5 is, for example, a liquefied petroleum gas (LPG; at about -45°C), a liquefied ethylene gas (LEG; at about -100°C), a liquefied natural gas (LNG; at about -160°C), liquefied hydrogen (LH₂; at about -250°C), or liquefied helium (LHe; at about -270°C).

In the instant embodiment, liquefied hydrogen is stored in the storage tank 13, and this liquefied hydrogen is transferred through the pipe 5.

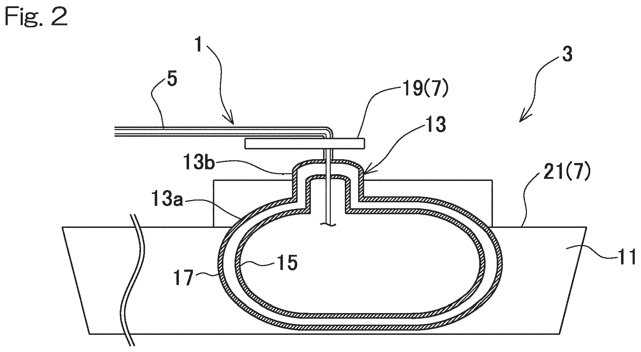

As shown in Fig. 2, in the instant embodiment, the storage tank 13 is constructed as a double-shell tank having an inner shell 15 and an outer shell 17. For instance, a vacuum heat insulation layer is defined between the inner shell 15 and the outer shell 17. Nevertheless, the construction of the storage tank 13 is not limited to this example. For instance, the storage tank 13 can be a single-shell tank that is covered with a heat insulation material. The heat insulation material in this case may, for example, be formed of a plurality of vacuum heat insulation panels or be formed of a plurality of foam panels.

In the instant embodiment, the storage tank 13 includes a body part 13a which is a part where a liquefied gas is stored and a dome part 13b which projects upwards from the body part 13a. The pipe 5 of the piping unit 1 is mounted, at one end thereof, to the dome part 13b. Note that, while only one piping unit 1 is depicted in the figure for simplicity, a plurality of piping units 1 may be associated with a single storage tank 13. The pipe 5 is arranged to extend from the interior of the storage tank 13 to the exterior of the storage tank 13, penetrating through the dome part 13b. In the instant embodiment, a dome part support 19 having a plate-like shape is disposed on or above the dome part 13b through a non-illustrated support structure, the dome part support 19 supporting the pipe 5 extending out of the dome part 13b. As shown in Fig. 1, the pipe 5 outside the dome part 13b is arranged to extend over and past the dome part support 19, further extend above and past the hull 11 (e.g., above an upper deck 21), and extend up to a manifold 23 that serves as a connection to, for example, a pipe 5 external to the hull 11.

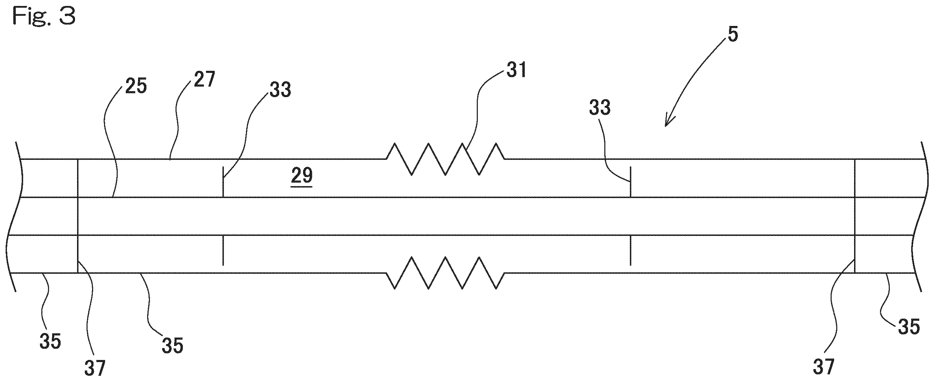

As shown in Fig. 3, the pipe 5 is formed of an inner tube 25 configured to convey the liquefied gas therethrough and an outer tube 27 covering the inner tube 25. A heat insulation layer 29 is defined in a radial gap between the inner tube 25 and the outer tube 27. The heat insulation layer 29 in the instant embodiment is a vacuum layer. Nevertheless, the heat insulation layer is not limited to a vacuum layer and may be, for example, a powder heat shield layer, a pseudo-vacuum layer, or a gas layer having a heat insulating property.

The outer tube 27 of the pipe 5 includes an extendable and contractible part 31 configured to permit a change in a length of the outer pipe in an axial direction. As used herein, an "axial direction" refers to the axial direction of the pipe 5, unless indicated otherwise. In the instant embodiment, the outer tube 27 includes a bellows as the extendable and contractible part 31. In the instant embodiment, the extendable and contractible part 31 is provided only in the outer tube 31, but not in the inner tube 25. Note that the extendable and contractible part 31 may be configured to permit not only a change in a length of the outer tube 27 in an axial direction but also, for example, a displacement of the outer tube in a radial direction.

The inner tube 25 is provided, at an outer peripheral surface thereof, with an inner tube spacer 33. The spacing between the inner tube 25 and the outer tube 27 is maintained to have at least a predetermined distance by the inner tube spacer 33.

Further, in the instant embodiment, the pipe 5 is constructed by coupling together a plurality of pipe segments 35 in a length direction thereof. In particular, each of the pipe segments 35 is provided, at each of opposite ends thereof, with a shield 37 that closes the heat insulation layer 29 between the outer tube 27 and the inner tube 25. Building the pipe 5 by combining the pipe segments 35 having such a structure not only facilitates the installation operation for the pipe 5 but also makes it easier to preserve and manage heat insulating performance such as a degree of vacuum of the heat insulation layer 29. Although not illustrated, a portion of the pipe 5 where the shield 37 is provided may be in turn covered by a jacket tube at an outer periphery thereof.

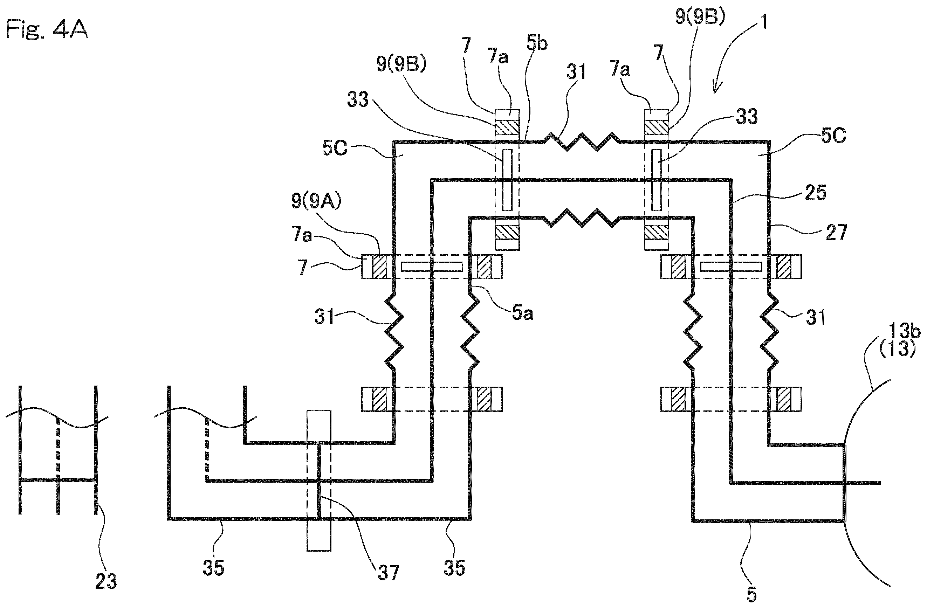

As shown in Fig. 4A, the piping unit 1 includes, as a support mechanism for the pipe 5, a base 7 including a portion 7a confronting an outer peripheral surface of the pipe 5 and a constraint member 9 secured to the base 7 and configured to constrain the pipe 5 to the base 7. The base 7 is fixed to a piece of equipment or an installation (which is, in this example, the liquefied gas storage vessel 3) to which the pipe 5 is installed. The position of the pipe 5 is restricted by the confronting portion 7a of the base 7 and the constraint member 9. Note that Fig. 4A depicts a state (which will hereinafter be called an "ambient temperature state") in which there is no flow of the liquefied gas in the pipe 5 and thus the inner tube 25 has no thermal contraction.

In the example illustrated in Fig. 4A, the pipe 5 is arranged to extend out of the dome part 13b up to the manifold 23 while being angled at a generally right angle at one or more intermediate locations thereof. In other words, the pipe 5 includes two straight pipe portions (i.e., a first straight pipe portion 5a and a second straight pipe portion 5b) extending in a rectilinear fashion and an angled pipe portion 5c connecting the first straight pipe portion 5a with the second straight pipe portion 5b in an angled fashion.

Further, in the illustrated example, both the first straight pipe portion 5a and the second straight pipe portion 5b are provided with the extendable and contractible part 31, and both the first straight pipe portion 5a and the second straight pipe portion 5b are provided with the constraint member 9. In the description below, for convenience, the constraint member 9 associated with the first straight pipe portion 5a is called a "first constraint member 9A," and the constraint member 9 associated with the second straight pipe portion 5b is called a "second constraint member 9B."

Furthermore, at opposite ends of the pipe 5, both the outer tube 27 and the inner tube 25 are fixed to the piece of equipment or the installation to which this pipe 5 is installed. In the instant embodiment, the outer tube 27 and the inner tube 25 are fixed at one end thereof to the storage tank 13 and fixed at the other end thereof to the manifold 23. Moreover, when the pipe 5 is segmented into a plurality of pipe segments 35 as is the case with the illustrated example, the outer tube 27 and the inner tube 25 in a segmented pipe 35 may be fixed at opposite ends thereof. In the illustrated example, the shield portion 37 for the outer tube 27 and the inner tube 25 in a segmented pipe 35 is also fixed.

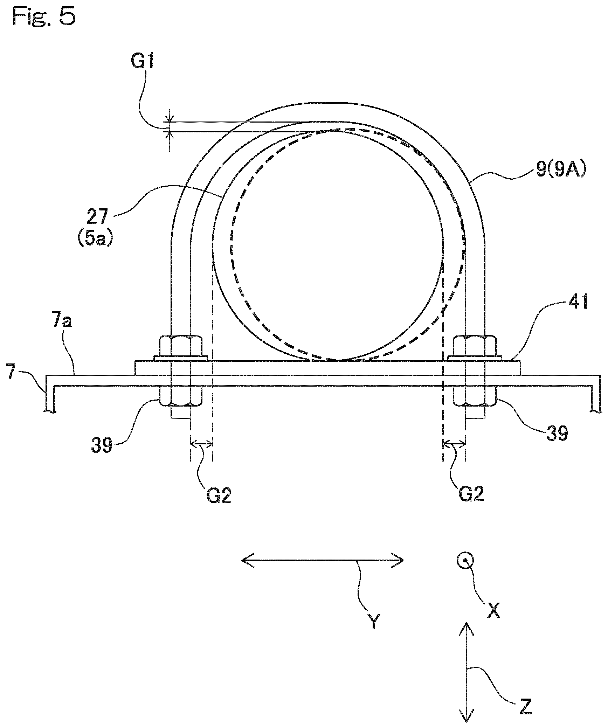

Hereinafter, an example configuration is mainly described in which the pipe 5 is arranged to extend in the horizontal. In this case, the piing 5 is placed on or above the confronting portion 7a of the base 7, as shown in Fig. 5. In the illustrated example, the confronting portion 7a has a flat surface. Nevertheless, the support mechanism for the pipe 5 according to the instant embodiment can also be applied to a pipe 5 arranged to extend in the vertical or a pipe 5 arranged to extend in a direction inclined relative to the horizontal. As used herein, a direction in which the pipe 5 confronts the confronting portion 7a of the base 7 (which is, in the example of Fig. 5, a direction vertical to the flat surface of the confronting portion 7a - namely, the vertical) is simply called a "confronting direction Z," and a direction perpendicular to both the axial direction X of the piping 1 and the confronting direction Z is called a "transverse direction Y." Further, in the following description, for convenience, the side on which the pipe 5 is positioned with respect to the base 7 is denoted as "upper" in the confronting direction Z.

As shown in Fig. 5, the constraint member 9 is configured to constrain the outer tube 27 in a displaceable manner in both the axial direction X and the transverse direction Y. In other words, the constraint member 9 includes a part that restricts the position of the outer tube 27 placed on or above the base 7 by making use of a gap present at least in the upper direction and opposite lateral directions (i.e., the transverse direction Y). Preferably, the constraint member 9 is shaped such that this part is formed in an integral and contiguous manner. For example, the constraint member is U-shaped.

Specifically, in the illustrated example, the constraint member 9 is formed as a U-shaped bolt. This constraint member 9 is secured, at opposite ends thereof, to the base 7 with nuts 39 in such a manner that the constraint member straddles the pipe 5 placed on or above the base 7. The dimension of the inner peripheral surface of the constraint member 9 in each direction is selected to be greater than the dimension of the outer peripheral surface of the outer tube 27 in a corresponding direction, when the pipe 5 is placed on or above the base 7 and the constraint member 9 is secured to the base 7. In other words, the geometry and the dimensions of the constraint member 9 are selected such that, when the pipe 5 is centrally positioned in the constraint member 9 in the transverse direction Y as viewed in a transverse cross-section thereof, the outer peripheral surface of the outer tube 27 does not come into contact with any portion of the inner peripheral surface of the constraint member 9 (namely, in such a manner that a gap is defined between the outer tube 27 and the constraint member 9).

In the following description, provided that the pipe 5 is centrally positioned in the constraint member 9 in the transverse direction Y as viewed in a transverse cross-section thereof, a gap above the uppermost portion of the pipe 5 relative to the constraint member 9 in the confronting direction Z is called an upper gap G1, and opposite gaps lateral to the side portions of the pipe 5 in the transverse direction Y are called lateral gaps G2.

In the instant embodiment, the upper gap G1 is selected to be of a minimum size that can hinder resonance that could occur in the outer tube 27. In particular, the size of the upper gap G1 is, for example, 1 to 2 mm for a pipe 5 having a diameter of 125 mm. Meanwhile, the lateral gaps G2 (which are, in this instance, e.g., lateral gaps G2 present between the first straight pipe portion 5a and the first constraint member 9A) are selected to be of such a size that corresponds to an amount of displacement resulting from the thermal contraction of the second straight pipe portion 5b to which it connects via the angled pipe portion 5c.

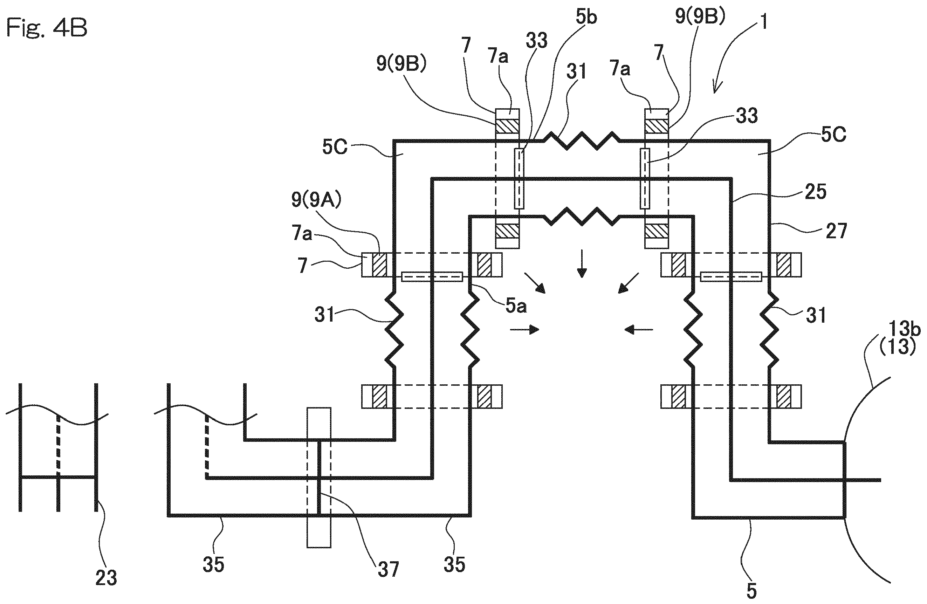

To be more specific, starting from the ambient temperature state depicted in Fig. 4A, the inner tube 25 undergoes thermal contraction in response to the flow of a liquefied gas through the pipe 5, as shown in Fig. 4B (and this state will hereinafter be called a "low temperature state.") Displacement resulting from the thermal contraction of this inner tube 25 causes, via the inner tube spacer 33, the outer tube 27 including the extendable and contractible part 31 to be displaced in directions indicated by arrows in the figure. In the illustrated example, at the second straight pipe portion 5b, the outer tube 27 is displaced in the axial direction of the second straight pipe portion 5b in response to the thermal contraction of the inner tube 25. The first straight pipe portion 5a extending in a direction generally perpendicular to the second straight pipe portion 5b undergoes displacement in the transverse direction Y towards the position represented by broken lines in Fig. 5, by an amount corresponding to the amount of such displacement of the second straight pipe portion 5b in the axial direction. The lateral gaps G2 present between the first straight pipe portion 5a and the first constraint member 9A are selected to be of such a size that permits this displacement while stopping any displacement in the transverse direction Y that exceeds this particular displacement. In particular, the size of a lateral gap G2 is, for example, 10 to 20 mm for a pipe 5 having a diameter of 125 mm.

Because, in the illustrated example, both the first straight pipe portion 5a and the second straight pipe portion 5b (Fig. 4A) have the extendable and contractible part 31, the size of the lateral gaps G2 in each straight pipe portion is selected to be of the aforementioned size.

Nevertheless, the size of the upper gap G1 and the size of the lateral gaps G2 are not limited to those in these examples. Also, in the ambient temperature state, a lateral gap G2 may be defined on only one side in the transverse direction Y (that is, the outer tube 27 may be in contact with the constraint member 9 on the other side), or alternatively, only the upper gap G1 may be defined with no lateral gaps G2 defined. Moreover, the geometry of the constraint member 9 is not limited to that in the illustrated example. The method used to secure the constraint member 9 to the base 7 is not limited to screwed fastening as used in the illustrated example but may be welded fastening, for instance.

Note that, in the example illustrated in Fig. 4A, in which the pipe 5 is angled via the angled pipe portion 5c, only the first straight pipe portion 5a may have the extendable and contractible part 31, and the second straight pipe portion 5b may be provided with the second constraint member 9B. In this case, the second constraint member 9B is configured to constrain the second straight pipe portion 5b in a displaceable manner in a transverse direction perpendicular to both the axial direction of this second straight pipe portion 5b and the confronting direction. Further, when only the first straight pipe portion 5a has the extendable and contractible part 31, the first straight pipe portion 5a may also be provided with the first constraint member 9A. In this case, the first constraint member 9A is configured to constrain the first straight pipe portion 5a in a displaceable manner at least in the axial direction of the first straight pipe portion 5a.

As opposed to the illustrated example, the pipe 5 may only include a straight pipe portion 5a without the angled pipe portion 5c. In this case, the constraint member 9 is configured to constrain the pipe 5 in a displaceable manner at least in the axial direction of the pipe.

Moreover, in the instant embodiment, at least part of the inner tube spacer 33 is disposed to be located in the width range of the constraint member 9 in the axial direction, in both the ambient temperature state depicted in Fig. 4A and the low temperature state depicted in Fig. 4B in which the inner tube 25 has been contracted to a maximum degree. In other words, in the ambient temperature state, the position of the constraint member 9 in the axial direction overlaps with the inner tube spacer 33.

As described above, the thermal contraction occurring in the inner tube 25 causes displacement of the outer tube 27 via the inner tube spacer 33. Thus, by aligning the position of the constraint member 9 with the position of the inner tube spacer 33, it can be ensured that the outer tube 27 responds to the thermal contraction of the inner tube 25 in a conforming manner. As a result, the stress occurring in the inner tube 25 and the outer tube 27 can be suppressed. Nevertheless, the relative positional relation between the inner tube spacer 33 and the constraint member 9 is not limited to that in this instance.

As shown in Fig. 5, according to the invention, a low friction member 41 is interposed between the pipe 5 and the base 7. The low friction member 41 is a plate-like member having a coefficient of friction smaller than that of a surface of the confronting portion 7a of the base 7 on which it rests. In particular, a resin pad made of polyethylene terephthalate (PET) resin is used, for example, as the low friction member 41 in the instant embodiment. The material of the low friction member 41 is not limited to this example. The material may be a different type of resin such as polyethylene (PE) or polytetrafluoroethylene (PTFE), and may also be a non-resin material such as wood.

In the illustrated example, the low friction member 41 is secured to the base 7 by using the constraint member 9 in the form of the U-shaped bolt. Nevertheless, the method used to secure the low friction member 41 to the base 7 is not limited to this. Also, in the illustrated example, the low friction member 41 is produced as a member separate from the base 7 and subsequently coupled to the base 7; however, the low friction member 41 may alternatively be provided integrally with a portion of the base 7 that comes into contact with the pipe 5.

By interposing the low friction member 41 between the pipe 5 and the base 7 in this way, displacement of the outer tube 27 can be facilitated, ensuring that the outer tube responds to the thermal contraction of the inner tube 25 in a conforming manner. Nevertheless, the interposition of the low friction member 41 between the pipe 5 and the base 7 is not a requirement.

The base 7 used may be any structure as long as it includes a part on or above which the pipe 5 can be placed when the pipe 5 is to be arranged to extend in the horizontal, and as long as it has a sufficient strength to support the pipe 5. For example, in the illustrated example in which the piping unit 1 is installed on the hull 11, the dome part support 19 mentioned above may be used as the base 7 in the surroundings of the storage tank 13. Also, the upper deck 21 of the hull 11 may be used as the base 7 at a location spaced from the storage tank 13 on the hull 11. Further, it is not requisite that the base 7 has a flat surface such as the one described as an example. For instance, the base 7 may be a spherical structure such as the dome part 13b or may be a turret-like structure.

According to the double-walled heat insulation piping unit 1 for a liquefied gas according to the instant embodiment described thus far, firstly, it is the outer tube 27 - not the inner tube 25 through which the liquefied gas passes and which is also difficult to inspect - that is provided with the extendable and contractible part 31 such as a bellows which is an effective mechanism to permit thermal contraction of the inner tube 25 and absorb a difference in thermal contraction between the inner tube 25 and the outer tube 27; thus, reliable transfer of the liquefied gas is ensured. Further, the provision of the extendable and contractible part 31 in the outer tube 27 means that there will be displacement of the outer tube 27 in response to the thermal contraction of the inner tube 25. However, with the constraint member 9 configured to constrain the outer tube 27 in a displaceable manner, possible generation of high stress to the outer tube 27 can be mitigated while also preventing the outer tube 27 from being moved excessively by external causes. Accordingly, possible generation of high stress that results from a difference in thermal contraction between the inner tube 25 and the outer tube 27 of the double-walled heat insulation pipe 5 for a liquefied gas can be mitigated with a simple design and without jeopardizing the reliability of the pipe in liquefied gas transfer.

Also, when a piping unit 1 is installed to a liquefied gas storage vessel, it is particularly important that possible resonance or excessive movement of an outer tube 27 provided with an extendable and contractible part 31 - due to vibrations of a hull 1 or deformation - be limited, in order to suppress stress generated in the outer tube 27. In the liquefied gas storage vessel 3 according to the instant embodiment, the piping unit 1 having the aforementioned configuration and benefits is installed in place. Accordingly, possible generation of high stress that results from a difference in thermal contraction between the inner tube 25 and the outer tube 27 can be mitigated with a simple design and without jeopardizing reliable transfer of the liquefied gas.

Note that the extendable and contractible part 31 of the outer tube 27, the constraint member 9 associated therewith, and the base 7 of the piping unit 1 do not have to be provided throughout the pipe 5 but may be provided only in part thereof.

While preferred embodiments of the present invention have thus far been described in connection with the drawings, various additions, changes, or omissions can be made therein without departing from the principle of the present invention and are therefore encompassed within the scope of the present invention.

### [Reference Symbols]

- 1: double-walled heat insulation piping unit for liquefied gas
- 3: liquefied gas storage vessel
- 5: double-walled heat insulation pipe
- 5a: first straight pipe portion
- 5b: second straight pipe portion
- 5c: angled pipe portion
- 7: base
- 9: constraint member
- 25: inner tube
- 27: outer tube
- 31: extendable and contractible part
- 33: inner tube spacer

## Claims

1. A double-walled heat insulation piping unit (1) for a liquefied gas which is a piping unit for transferring the liquefied gas, the unit (1) comprising:
a double-walled heat insulation pipe (5) comprising an inner tube (25) configured to convey the liquefied gas therethrough, and an outer tube (27) covering the inner tube (25) with a heat insulation layer (29) therebetween, the outer tube (27) including an extendable and contractible part (31) configured to permit a change in a length of the outer tube (27) at least in an axial direction (X); **characterized by**
a base (7) including a portion (7a) confronting an outer peripheral surface of the double-walled heat insulation pipe (5);
a constraint member (9) secured to the base (7) and configured to constrain the outer tube (27) to the base (7) in a displaceable manner at least in the axial direction (X); and
a low friction member (41) having a plate-like shape and interposed between the double-walled heat insulation pipe (5) and the base (7), the low friction member (41) including a surface in contact with the double-walled heat insulation pipe (5), at least the surface having a coefficient of friction smaller than that of the base (7).

2. The double-walled heat insulation piping unit for a liquefied gas as claimed in claim 1, wherein the double-walled heat insulation pipe (5) includes first and second straight pipe portions (5a, 5b) extending in a rectilinear fashion and an angled pipe portion (5c) connecting the first straight pipe portion (5a) with the second straight pipe portion (5b) in an angled fashion;
at least the first straight pipe portion (5a) includes the extendable and contractible part (31); and
the second straight pipe portion (5b) is provided with the constraint member (9), the constraint member (9) being configured to constrain the second straight pipe portion (5b) in a displaceable manner in a transverse direction (Y) perpendicular to both an axial direction (X) of the second straight pipe portion (5b) and a direction (Z) in which the double-walled heat insulation pipe (5) confronts the base (7).

3. The double-walled heat insulation piping unit for a liquefied gas as claimed in claim 1 or 2, wherein the constraint member (9) is shaped to define a gap between the constraint member (9) and the outer tube (27) in a direction (Z) in which the double-walled heat insulation pipe (5) confronts the base (7).

4. A liquefied gas storage vessel (3) comprising:
a hull (11);
a storage tank (13) installed on the hull (11) and configured to store a liquefied gas; and
a double-walled heat insulation piping unit (1) for a liquefied gas as claimed in any one of claims 1 to 3, the unit (1) being mounted, at one end thereof, to the storage tank (13).

## Patentansprüche

1. Doppelwandige Wärmeisolationsrohrleitungseinheit (1) für ein Flüssiggas, die eine Rohrleitungseinheit
zum Übertragen des Flüssiggases ist, die Einheit (1) umfassend:
ein doppelwandiges Wärmeisolationsrohr (5), umfassend ein Innenrohr (25), das konfiguriert ist, um das Flüssiggas dort hindurch zu leiten, und ein Außenrohr (27), das das Innenrohr (25) mit einer Wärmeisolationsschicht (29) dazwischen umgibt, wobei das Außenrohr (27) einen ausziehbaren und einziehbaren Teil (31) einschließt, der konfiguriert ist, um eine Änderung einer Länge des Außenrohrs (27) mindestens in einer axialen Richtung (X) zuzulassen; **gekennzeichnet durch**
eine Basis (7), die einen Abschnitt (7 a) einschließt, der einer äußeren Umfangsoberfläche des doppelwandigen Wärmeisolationsrohrs (5) gegenüberliegt;
ein Begrenzungselement (9), das an der Basis (7) befestigt und konfiguriert ist, um das Außenrohr (27) an der Basis (7) mindestens in der axialen Richtung (X) auf verschiebbare Weise zu begrenzen; und
ein reibungsarmes Element (41) mit einer plattenartigen Form, das zwischen dem doppelwandigen Wärmeisolationsrohr (5) und der Basis (7) angeordnet ist, wobei das reibungsarme Element (41) eine Oberfläche einschließt, die mit dem doppelwandigen Wärmeisolationsrohr (5) in Kontakt steht, wobei mindestens die Oberfläche einen Reibungskoeffizienten aufweist, der kleiner als derjenige der Basis (7) ist.

2. Doppelwandige Wärmeisolationsrohrleitungseinheit für ein Flüssiggas nach Anspruch 1, wobei das doppelwandige Wärmeisolationsrohr (5) einen ersten und einen zweiten geraden Rohrabschnitt (5a, 5b), die sich auf geradlinige Art erstrecken, und einen abgewinkelten Rohrabschnitt (5c), der den ersten geraden Rohrabschnitt (5a) mit dem zweiten geraden Rohrabschnitt (5b) in auf abgewinkelte Art verbindet, einschließt;
mindestens der erste gerade Rohrabschnitt (5a) den ausziehbaren und einziehbaren Teil (31) einschließt; und
der zweite gerade Rohrabschnitt (5b) mit dem Begrenzungselement (9) versehen ist, wobei das Begrenzungselement (9) konfiguriert ist, um den zweiten geraden Rohrabschnitt (5b) auf verschiebbare Weise in einer Querrichtung (Y), die senkrecht sowohl zu einer axialen Richtung (X) des zweiten geraden Rohrabschnitts (5b) als auch zu einer Richtung (Z) verläuft, in der das doppelwandige Wärmeisolationsrohr (5) der Basis (7) gegenüberliegt, zu begrenzen.

3. Doppelwandige Wärmeisolationsrohrleitungseinheit für ein Flüssiggas nach Anspruch 1 oder 2, wobei das Begrenzungselement (9) geformt ist, um einen Spalt zwischen dem Begrenzungselement (9) und dem Außenrohr (27) in einer Richtung (Z), in der das doppelwandige Wärmeisolationsrohr (5) der Basis (7) gegenüberliegt, zu definieren.

4. Flüssiggaslagerbehälter (3), umfassend:
einen Rumpf (11);
einen Lagertank (13), der auf dem Rumpf (11) installiert und konfiguriert ist, um ein Flüssiggas zu speichern; und
eine doppelwandige Wärmeisolationsrohrleitungseinheit (1) für ein Flüssiggas nach einem der Ansprüche 1 bis 3, wobei die Einheit (1) an einem ihrer Enden an dem Lagertank (13) angebracht ist.

## Revendications

1. Unité de tuyauterie d'isolation thermique à double paroi (1) pour un gaz liquéfié, qui est une unité
de tuyauterie afin de transférer du gaz liquéfié, l'unité (1) comprenant :
un tuyau d'isolation thermique à double paroi (5) comprenant un tube intérieur (25) conçu pour transporter le gaz liquéfié à travers celui-ci, et un tube extérieur (27) couvrant le tube intérieur (25) avec une couche d'isolation thermique (29) entre les deux, le tube extérieur (27) comportant une partie extensible et contractable (31) conçue pour permettre un changement d'une longueur du tube extérieur (27) au moins dans une direction axiale (X) ; **caractérisé par**
une base (7) comportant une partie (7a) faisant face à une surface périphérique extérieure du tuyau d'isolation thermique à double paroi (5) ;
un élément de contrainte (9) fixé à la base (7) et conçu pour contraindre le tube extérieur (27) à la base (7) de manière déplaçable au moins dans la direction axiale (X) ; et
un élément à faible frottement (41) ayant une forme de plaque et interposé entre le tuyau d'isolation thermique à double paroi (5) et la base (7), l'élément à faible frottement (41) comportant une surface en contact avec le tuyau d'isolation thermique à double paroi (5), au moins la surface ayant un coefficient de frottement inférieur à celui de la base (7).

2. Unité de tuyauterie d'isolation thermique à double paroi pour un gaz liquéfié selon la revendication 1, dans laquelle le tuyau d'isolation thermique à double paroi (5) comporte des première et seconde parties de tuyau droites (5a, 5b) s'étendant de manière rectiligne et une partie de tuyau inclinée (5c) reliant la première partie de tuyau droite (5a) à la seconde partie de tuyau droite (5b) d'une manière angulaire ;
au moins la première partie de tuyau droite (5a) comporte la partie extensible et contractable (31) ; et
la seconde partie de tuyau droit (5b) est pourvue de l'élément de contrainte (9), l'élément de contrainte (9) étant conçu pour contraindre la seconde partie de tuyau droit (5b) de manière déplaçable dans une direction transversale (Y) perpendiculaire à la fois à une direction axiale (X) de la seconde partie de tuyau droit (5b) et une direction (Z) dans laquelle le tuyau d'isolation thermique à double paroi (5) fait face à la base (7).

3. Unité de tuyauterie d'isolation thermique à double paroi pour un gaz liquéfié selon la revendication 1 ou 2, dans laquelle l'élément de contrainte (9) est formé pour définir un espace entre l'élément de contrainte (9) et le tube extérieur (27) dans une direction (Z) dans laquelle le tuyau d'isolation thermique à double paroi (5) fait face à la base (7).

4. Récipient de stockage de gaz liquéfié (3) comprenant :
une coque (11) ;
un réservoir de stockage (13) installé sur la coque (11) et conçu pour stocker un gaz liquéfié ; et
une unité de tuyauterie d'isolation thermique à double paroi (1) pour un gaz liquéfié selon l'une quelconque des revendications 1 à 3, l'unité (1) étant montée, à une extrémité de celle-ci, sur le réservoir de stockage (13).
